# EUROPEAN PATENT APPLICATION

(11) **EP 3 293 801 A1**
(43) Date of publication of application: **14.03.2018**
(21) Application number: 16188284.0
(22) Date of filing: 12.09.2016
(51) Int. Cl.: H01M 4/02, H01M 4/13, H01M 4/62, H01M 10/052

(54) **ELECTRODE WITH AN IMPROVED SECURITY BEHAVIOR AND BATTERY CELL COMPRISING THE SAME**

(71) Applicant: Lithium Energy and Power GmbH & Co. KG, 70469 Stuttgart (DE)
(72) Inventor: Deromelaere, Gaetan, 70806 Kornwestheim (DE); Wille, Christopher, 70563 Stuttgart (DE); Friedrich, Marco, 71638 Ludwigsburg (DE); Klinsmann, Markus, 70195 Stuttgart (DE); Liebenow, Cornelius, 70372 Stuttgart (DE)
(74) Representative: Bee, Joachim

(57) **Abstract**

The present invention relates to an electrode (26, 28) for a battery cell (10), comprising a current collector (22, 24), which is electrically connected to an active material layer (18, 20), wherein the active material layer (18, 20) comprises an active material (30) and a binder, wherein the active material layer (18, 20) further comprises an electrically insulating security filler (34), the security filler (34) having a melting point which is higher compared to the working temperature of the electrode (26, 28) but which is lower compared to the onset-temperature of the battery cell (10) and which is lower compared to the melting point of the active material (30) and the binder.

## Description

The present invention relates to an electrode which shows an improved security behavior. The present invention further relates to battery cell comprising such an electrode, such as a cell for a lithium ion battery.

### State of the art

The battery market is gaining pace in recent years. Several cell chemistries such as Nickel-Metal hydride, Li-ion secondary, Lithium primary cells, etc. and several designs, such as button cells, cylindrical cells, prismatic cells, cell stacks, etc. are available in the market. These cells for example consist of jelly rolls that are connected to current collector tabs and the complete assembly is sealed hermetically in aluminum or steel can. Before assembly of the single cells in a battery pack, the individual cells are wrapped with plastic tapes or coated with electronically non-conductive paint. This is done in order to avoid electrical contact between different cells in a battery pack and hence a short-circuit within the system.

Such batteries are predominantly used in consumer electronics; however, improvements in safety are further required for full acceptance of Li-ion cells in transportation applications, such as electric vehicles, or in further batteries.

DE 10 2014 001 025 A1 describes an electrochemical cell which comprises an anode, a cathode and a separator separating the anode and the cathode. Both anode and cathode comprise a respective active material. With regard to the positive electrode it is provided that additionally to the active material, the electrode comprises a filler which is adapted for improving the electrical conductivity.

Document US 2015/0188126 A1 describes a lithium secondary battery having a negative electrode, which is applied with a silicon-carbon composite that has good ionic conductivity and electrical conductivity to be able to maintain a high capacity, and an electrolyte that may improve the electrochemical characteristics of the negative electrode.

Document DE 10 2011 079026 A1 describes an electrode, such as particularly for a lithium sulfur battery. Such an electrode comprises a mixture of an electrically conductive carbon based material and metallic lithium.

Document DE 11 2011 105 960 T5 describes a secondary battery having a positive electrode, a negative electrode and a non-aqueous electrolyte. The negative electrode comprises a negative active material layer with a tiny electrically conductive material in a particulate form and/or a tiny material in a form of a fiber.

### Disclosure of the invention

The present invention relates to an electrode for a battery cell, comprising a current collector which is electrically connected to an active material layer, wherein the active material layer comprises an active material and a binder, wherein the active material layer further comprises an electrically insulating security filler, the security filler having a melting point which is higher compared to the working temperature of the electrode but which is lower compared to the onset-temperature of the battery cell and which is lower compared to the melting point of the active material and the binder.

Such an electrode allows an improved security behavior of a battery in particular when being in use.

An electrode as described above may particularly be an electrode for a battery cell of a battery, such as of a lithium battery, for example a lithium ion battery. However, the electrode is in no way restricted to such examples. Further, the electrode may generally be an anode or a cathode without leaving the sense of the present invention.

The electrode comprises a current collector which is at least partly coated with an active material layer. Such an arrangement is known per se. The current collector may be formed of a metal such as of aluminum or copper, depending on the polarity of the electrode. In detail, the current collector may be formed from aluminum in case the electrode is a positive electrode or it may be formed from copper in case the electrode is formed as a negative electrode.

The current collector is electrically connected to a layer of active material. Such layer may comprise an active material. The latter may comprise, for example, lithium or a lithium intercalation material, such as graphite or lithium titanate, in case the electrode is an anode, or it may comprise, for example, nickel-manganese-cobalt-oxide (NMC) or lithium-cobalt-oxide (LiCoO₂), in case the electrode is a cathode.

The active material may be embedded in a binder material. Suitable binder materials comprise inter alia polyvinylidene fluoride (PVDF) or polyethylene glycol (PEG). Such an arrangement is known in the art.

Further, electrically conductive particles may be present in the active material layer in order to enhance the electrical conductivity of the whole layer and thus the working behavior of the electrode, or a cell equipped therewith, respectively.

The layers of active material may be separated by a separator, which may be formed of a porous polymeric foil, such as polypropylene, for example. The separator may be soaked with an electrolyte, such as lithiumhexafluorophosphate (LiPF₆) being present in a solvent, such as ethylene carbonate, propylene carbonate, or the like.

Referring to an electrode as described above, the active material layer further comprises an electrically insulating security filler. Such security filler comprises a melting point which is higher compared to the working temperature of the electrode but which is lower compared to the onset-temperature of the battery cell and which is lower compared to the melting point of the active material and the binder. This arrangement allows a significant benefit with regard to security behavior of the electrode.

In detail, during the charge of lithium ions cells, for example, the lithium ions are migrating from cathode by dint of electrolyte across the separator to the anode simultaneously with an electron flow in the same direction on the external circuit. During discharge the processes are taking place in the other direction.

If the cell is brought outside the normal cycling or storage conditions, such as high or low temperature, internal or external short circuits, overcharge, deep discharge, etc., the inner temperature can excessively rise. If the temperature in the cell is sufficiently high, in extreme cases, it could lead to decomposition of electrolyte and of the electrodes in the battery or separator shrinkage, which in turn leads to extreme safety hazards, such as gas valve burst. Once started, this chain reaction can only hardly be stopped.

In detail, the presence of a volatile, combustible electrolyte and an oxidizing agent, such as at lithium oxide cathodes, makes a battery cell such as a Li-ion cell, susceptible to fires and explosions. Internal shorts or mechanical damage, e.g. caused within certain abuse tests such as the nail penetration test, create local current paths over which the cell discharges. The corresponding electric currents are accompanied by a strongly localized Joule heating. This leads to a strong increase of the local temperature at the internal short or nail penetration location. When a critical temperature is reached, exothermic chemical reactions are initiated between the electrodes and the electrolyte, raising the cell's internal pressure and temperature even more. The increased temperature accelerates these chemical reactions, producing more heat. This leads to a reaction which can only hardly be controlled so that a serious damage may follow, as indicated before.

It has surprisingly be found that using an electrode as described before can be capable of at least significantly reducing either the ion flow or the electric current which in turn may prevent serious damages or the destruction of the cell.

In fact, in case of a failure of a battery cell, or a battery respectively, it may be provided that an enlarged current flows through the battery cell, such as a short-circuit current. Such a state may be imitated by the so called nail penetration test. During nail penetration, a part or all of the current is flowing around the nail in the damaged area and will increase locally the temperature of the layers due to the electrical loss dissipation. The magnitude of the current is given by the resistance of the damaged zone and the temperature increase depends on the heat transfer inside the cell.

By using an electrode comprising an electrically insulating security filler in the active material layer, the temperature increase due to the increased current around the nail or in the failure region leads to a melting process of this specific material. This in turn increases the electrical resistance of the damaged zone by disturbing the electrical path through the layer due to the breakage of contacts between conductive elements or insulation of the conductive additives from the active particles. In other words, as the security filler melts, the liquid filler material is distributed particularly in the hot region and thus in the region of the failure and thus due to its electrical resistivity, it destroys or damages electric paths and thus at least reduces the current flow and therefore limits the electrical power dissipated at this point. This limits the temperature increase inside the cell. Therefore, the danger of a thermal runaway can be at least significantly reduced.

Apart from that, due to the phase transition from solid to liquid, the security filler may absorb, or consume, respectively, heat from its environment. Thus, the heat generated by the power loss at a zone in which a failure occurs, such as near the nail in a nail penetration test, is partly absorbed by the melting of the security filler. This means that only a part of the total dissipated energy is actually used to heat up the layers, such as particularly the cathode, the anode and the separator. Therefore, the temperature increase inside the cell is limited by the phase transition, especially near the failure region, which is the critical area for starting a thermal runaway. Thus, a very effective security measure is provided by the electrode as described above which further limits the risk of a thermal runaway inside the cell.

Due to the fact, that the melting point of the security filler is higher compared to the working temperature of the electrode, the normal working behavior is not negatively influenced. The working temperature of the electrode may thereby be dependent from the specific application and thus, for example, the construction of a battery cell the electrode is used in. It may thereby be provided that the distance of the melting point of the security filler and the working temperature may be chosen like required and may thus include a respective security range. This allows an especially reliable working behavior of the electrode, or the battery cell which is equipped with such an electrode, respectively. The working temperature may be determined simply by measuring the temperature during a charge and/or discharge cycle, e.g. at outer temperatures of 22°C. An exemplary but in no way limiting working temperature of an electrode lies at 60°C.

The melting point of the security filler is further lower compared to the onset-temperature of the battery cell and is lower compared to the melting point of the active material and the binder. Again, a respective security range of the temperature may be chosen. This embodiment has the advantageous effect that the security filler melts before the onset-temperature is reached. With this regard, the onset-temperature of the battery cell and thus for example of the active material layer, or active material, the security filler is provided in, may be defined as the temperature at which a cell starts to generate heat by itself and thus at which a thermal runaway is started. Such a temperature may be determined by respective examinations or tests of the battery cell and by studying the arrangement of the battery cell. Further, due to the fact that the melting point of the security filler is further lower compared to the melting point of the active material and the binder, it may be secured that the security filler melts first and thus provides the advantageous security effect by providing an electrically insulative liquid material. Further, no restrictions with regard to the active material and the binder have to be fulfilled.

When providing an electrode as described above, further, a fully self-working system is achieved, which works solely due to the temperature rise caused by the failure. It is very effective so that no additional measures have to be taken which in turn leads to a highly reliable and secure measure for reducing the danger of a battery. The provision of further measures, such as an early detection system, may be advantageous but, however, is not required.

Apart from that, the present solution works essentially without any delay time which further provides additional advantages about known security solutions, because it is possible to counteract against detrimental effects very early which may allow more reliably to stop such effects or which may securely stop an unsafe intermediate state in the cell.

Therefore with regard to the filler material, it is provided that the latter is electrically insulating. With this regard, it may be preferred that the filler material has an electrical conductivity in the range of less than1E-13 S/m, such as less than 1E-15S/m, such as in a range of equal or more than 1E-17 S/m to equal or less than 1E-15S/m. This allows an effective security effect in case the molten filler material damaged the electrical current paths. However, it has to be noted that the above-defined values are for illustrative purpose only and are not limiting the invention. The specific conductivity may be chosen such, that a desired security effect will be reached and thus a thermal runaway may be prevented in a degree wich is sufficient for the specific application.

According to an embodiment, the security filler has a melting point lying in the range of more than 60°C to equal or less than 150°C, preferably of more than 60°C to equal or less than 130°C, such as of equal or more than 75°C to equal or less than 120°C, for example of equal or more than 95°C to equal or less than 120°C. This embodiment on the one side allows a battery to work under normal and thus desired conditions without the security filler to melt. This is due to the fact that the melting point of the security material is higher than the maximum operating temperature of the cell which may lie at about 60°C. On the other hand, the melting point of the material is lower than the temperature of the separator shutdown, which may lie at about 130°C, and of the onset temperature of the battery cell.

According to a further embodiment, the security filler comprises a material or consist of a material which is selected from the group consisting of waxes, such as paraffin wax, and polyolefines, such as polyethylene, such as low-density polyethylenes. It has been found that especially the before-named materials show good melting properties and further may be distributed effectively, so that the security effect may be reached especially reliably and effectively. Generally, polymeric materials may be suitable.

According to a further embodiment, it may be provided that the security filler is at least partly present in the form of particles. This allows an easy production process and further allows an easy adaption of the size of the particles. This may be especially advantageous as the size of the particles has a large influence of the surface of the whole material, referring to a specific weight. With this regard, the surface of the material and thus the size of the particles has a strong influence of the melting behavior. With regard to the filler material being present as particles, it may further be provided that the latter has a diameter in the range of equal or more than 1 µm to equal or less than 10 µm.

Regarding the particles, generally every particle form may be used. However, it may be preferred if the particles have a spherical form, or the form of a cube, for example, in order to have a better packing capability with the particles of the active material of the electrodes.

Alternatively or additionally, it may be provided that the security filler is at least partly present in the form of fibers or flakes. With this regard, fibers have the advantages that such filler materials may be produced in a very defined manner and thus have very defined melting properties. It can also improve the particle arrangement inside the anode, if the active particles are flakes. Both fibers and flakes have at least one direction with a short diameter. In this direction heat flow from the perimeter to the center of the filler particles is faster, which may lead to a quicker melting behavior of the particles.

With regard to the fibers, it may be preferred if such filler materials have a diameter in the range of equal or more than 1 µm to equal or less than 5 µm and/or a length in a range of equal or more than 3 µm to equal or less than 10 µm.

According to a further embodiment, it may be provided the security filler is present in the active material layer in a range of equal or more than 2 wt.-% to equal or less than 20 wt.-%. According to this embodiment, it may be secured that sufficient filler material is present in order to secure that the current paths being present in case of a failure are reduced in a sufficient amount. Apart from that, it may be secured that the working behavior of a battery cell being equipped with such an electrode is not influenced in a negative manner due to the presence of the security filler.

With regard to further technical features and advantages of the electrode, it is referred to the description of the battery cell, the figures and the description of the figures.

The present invention further relates to a battery cell, comprising at least one electrode like described in detail before.

With this regard, the battery cell may comprise a separator having a first side and a second side, wherein the first side of the separator is positioned adjacent to a first layer of active material and wherein the second side of the separator is connected to a second layer of active material, wherein a first current collector is positioned adjacent to the first layer of active material on the side being arranged opposite to the separator and wherein a second current collector is positioned adjacent to the second layer of active material on the side being arranged opposite to the separator. The first current collector together with the first layer of active material may form or be part of a first electrode and the second current collector together with the second layer of active material may form or be part of a second electrode. It is provided that the first electrode and/or the second electrode may be formed as it is described in detail above.

Such a battery cell may thus provide an improved security behavior and may thus prevent or at least significantly reduce the danger of a thermal runaway for example in case an object is inserted into the cell structure.

The battery cell may be formed as a so-called jelly roll or wounded type cell, respectively, or it may have a stacked arrangement, for example.

According to an embodiment, it may be advantageous that the battery cell which may be part of an electrochemical energy storage device, such as a battery, is connected to a fast discharge device. This embodiment allows an even more improved security behavior.

Such a fast discharge device may for example comprise an electrical connection being provided between the anode and the cathode of the battery cell, wherein the electrical connection has a defined electrical resistance. The electrical connection preferably is provided external to the battery cell and thus not through the active material layers. The discharge current which flows through the electrical connection is thus defined by the electrical resistance of this electrical connection. The electrical connection of the fast discharge device preferably may not be operated during a normal and thus desired working mode of the battery, but it may be switched such, that it electrically connects the anode with the cathode in case a failure appears. Such a failure may for example be determined by measuring the temperature inside the battery or the battery cell or by measuring the current flowing through the battery or the battery cell in answer to which a switch is activated for activating the fast discharge device.

According to this embodiment, an additional measure is provided in order to prevent thermal failure in commercial batteries, such as Li-ion batteries, by the reduction of the localized current around the nail or internal short by an external low ohmic current path, namely the so called fast discharge device.

An increase of the resistance of the nail penetration area, or the area of failure, respectively, limits the current flowing at this position and therefore limits the electrical power dissipation, because more current is flowing outside the damaged zone close to the nail due to the external low ohmic short circuit. The smaller power dissipation generates a lower heating up of the nail penetration area and decreases the risk of a thermal runaway for the cell, as the temperature stays below a critical onset value.

The small current flowing at the short circuit position and its power loss from the Joule's effect leads to temperature rise around the short circuit, such as the nail in a nail penetration test, which additionally result in the security filler to melt. This effect further increases the electric resistance at the short circuit position by changing and/or insulating the electrical path inside the layers. A combination of these measures thus will provide an especially effective security measure.

With regard to further technical features and advantages of the electrochemical battery cell it is referred to the description of the electrode, the figures and the description of the figures.

### Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.
- Fig. 1: shows a schematical view of a battery cell;
- Fig. 2: shows a schematical view of an electrode of the battery cell according to Fig. 1;
- Fig. 3: shows an embodiment of a security filler for an electrode according to Fig. 2;
- Fig. 4: shows a further embodiment of a security filler for an electrode according to Fig. 2; and
- Fig. 5: shows a further embodiment of a security filler for an electrode according to Fig. 2.

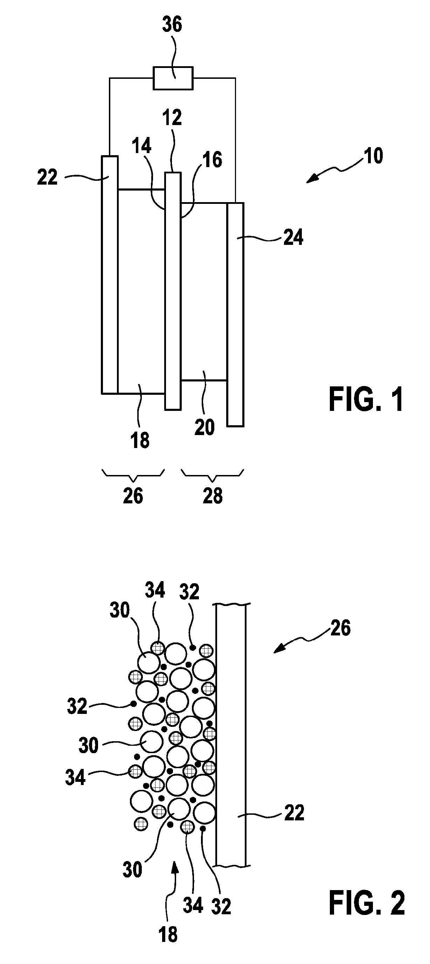

According to figure 1, a schematic view of a battery cell 10 according to the invention is shown.

With this regard, the battery cell 10 may comprise a separator 12 having a first side 14 and a second side 16, wherein the first side 14 of the separator 12 is positioned adjacent to a first active material layer 18 and wherein the second side 16 of the separator 12 is connected to a second active material layer 20, wherein a first current collector 22 is positioned adjacent to the first layer 18 of active material on the side being arranged opposite to the separator 12 and wherein a second current 24 collector is positioned adjacent to the second layer 20 of active material on the side being arranged opposite to the separator 12. The first current collector 22 together with the first layer 18 of active material may form or be part of a first electrode 26 and the second current collector 24 together with the second layer 20 of active material may form or be part of a second electrode 28. Such a battery cell 10 may be formed as a jelly roll.

Figure 1 further shows that the battery cell 10 is connected to a fast discharge device 36.

The first electrode 26 is shown in more detail in figure 2, wherein the first electrode 26 may be an anode or a cathode.

According to figure 2, it is shown that the current collector 22 is coated with the active material layer 18. The active material layer 18 comprises an active material 30, as well as electrically conductive particles 32. A binder is not shown as such. It is further provided that the active material layer 18 further comprises an electrically insulating security filler 34. The security filler 34 is provided such, that it has a melting point which is higher compared to the working temperature of the electrode 26 but which is lower compared to the onset-temperature of the battery cell 10 and which is lower compared to the melting point of the active material 30 and the binder.

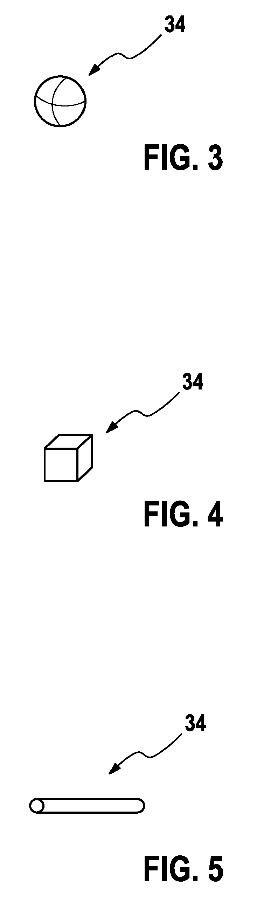

In the following figures, different embodiments of the security filler 34 are shown. With this regard, figure 3 shows a security filler 34 which is formed as a spherical particle. Figure 4 shows a security filler 34 being present in the form of a cubic particle. Figure 5 shows a security filler 34 which is formed as fiber.

## Claims

1. Electrode for a battery cell (10), comprising a current collector (22, 24), which is electrically connected to an active material layer (18, 20), wherein the active material layer (18, 20) comprises an active material (30) and a binder, **characterized in that** the active material layer (18, 20) further comprises an electrically insulating security filler (34), the security filler (34) having a melting point which is higher compared to the working temperature of the electrode (26, 28) but which is lower compared to the onset-temperature of the battery cell (10) and which is lower compared to the melting point of the active material (30) and the binder.

2. Electrode according to claim 1, **characterized in that** the security filler (34) has a melting point lying in the range of more than 60°C to equal or less than 150°C.

3. Electrode according to claim 1 or 2, **characterized in that** the security filler (34) comprises a material which is selected from the group consisting of waxes and polyolefines.

4. Electrode according to any of the preceding claims, **characterized in that** the security filler (34) is at least partly present in the form of particles.

5. Electrode according to claim 4, **characterized in that** the particles at least partly have a diameter in the range of equal or more than 1 µm to equal or less than 10 µm.

6. Electrode according to any of the preceding claims, **characterized in that** the security filler (34) is at least partly present in the form of fibers or flakes.

7. Electrode according to claim 6, **characterized in that** the fibers have at least one of a diameter in the range of equal or more than 1 µm to equal or less than 5 µm and a length in the range of equal or more than 3 µm to equal or less than 10 µm.

8. Electrode according to any of the preceding claims, **characterized in that** the security filler (34) is present in the active material layer (18, 20) in a range of equal or more than 2 wt.-% to equal or less than 20 wt.-%.

9. Battery cell, comprising at least one electrode (26, 28) according to any of claims 1 to 8.

10. Battery cell according to claim 9, **characterized in that** the battery cell (10) is connected to a fast discharge device (36).
